# EUROPÄISCHE PATENTSCHRIFT

(11) **EP 0 956 188 B1**
(45) Veröffentlichungstag und Bekanntmachung des Hinweises auf die Patenterteilung: **12.12.2001**
(21) Anmeldenummer: 98964458.8
(22) Anmeldetag: 28.11.1998
(51) Int. Cl.: B29C 59/00

(54) **VERFAHREN UND VORRICHTUNG ZUM UMFORMEN DER OBERFLÄCHEN VON EXTRUDIERTEN PROFILEN**
METHOD AND DEVICE FOR SHAPING THE SURFACE OF EXTRUDED PROFILES
PROCEDE ET DISPOSITIF POUR LE FORMAGE DE LA SURFACE DE PROFILES EXTRUDES

(30) Priorität: 28.11.1997 DE 29721105 U
(43) Veröffentlichungstag der Anmeldung: 17.11.1999
(73) Patentinhaber: REHAU AG + Co, 95111 Rehau (DE)
(72) Erfinder: WESTPHAL, Hans-Jürgen, D-95030 Hof (DE); SCHÖBEL, Michael, D-95100 Selb (DE); HEINL, Thomas, D-95028 Hof (DE); SCHINZEL, Hartmut, D-95213 Münchberg (DE); DITTMANN, Klaus, D-95111 Rehau (DE)
(86) Internationale Anmeldenummer: EP9807697
(87) Internationale Veröffentlichungsnummer: WO9928112

(56) Entgegenhaltungen:
- WO-A-88/00883
- US-A- 5 024 799
- US-A- 5 310 333

## Beschreibung

Die Erfindung betrifft ein Verfahren zum Umformen der Oberflächen von extrudierten Profilen aus thermoplastischen Materialien, mit einer Vorrichtung, die an der Umformfläche komplementär zur geforderten Umformgeometrie profiliert ist und diese in das durchlaufende Profil einprägt, wobei in einem ersten Schritt das umzuformende Profil abgekühlt und im formstabilen Zustand der Umformeinrichtung zugeführt wird.

Ein solches Verfahren ist zum Beispiel aus der WO 88/00883 bekannt. Das dort beschriebene Verfahren prägt mittels einer Vorrichtung Verzahnungsabschnitte in Kunststoffprofile ein. Es handelt sich hierbei um im Wesentlichen plattenförmige Profile.

In der US 2 075 735 ist eine Vorrichtung zum Durchführen eines Umformverfahrens beschrieben, die in einer Formgebungseinrichtung nachgeordnet ist. Bei dieser Prägeeinrichtung sind die Prägekörper auf einem Förderband raupenkettenartig umlaufend angeordnet. Wobei diese beidseits des zu prägenden gerade gefertigten Profiles angeordnet sind und auf dieses einwirken. Hierbei ist die Prägeoberfläche noch durch das Umformverfahren erwärmt und kann im Bedarfsfall auch beheizt werden.

Die Umformgeometrie ist komplementär in der Prägeeinrichtung ausgebildet und wird in das durchlaufende Profil eingeprägt.

Diese Vorrichtung und somit das mit ihr durchführbare Verfahren ist sehr aufwändig und damit kostenintensiv und störanfällig. Ein weiterer Nachteil dieser Vorrichtung wird darin gesehen, dass diese nur für das jeweils durchlaufende Profil verwendet werden kann und bei einem Profilwechsel zeit- und kostenaufwendig demontiert und eine neue Vorrichtung für das entsprechende Profil wieder montiert werden muss.

Eine weitere Vorrichtung zum Durchführen eines Umformverfahrens ist in der EP 0 092 745 beschrieben. Diese betrifft eine Vorrichtung zum Prägen der Oberflächen von thermoplastischen Profilen unmittelbar nach deren Formgebung im warmpfastischen Zustand.
Das verwendete Prägewerkzeug ist an seiner Umfangsfläche komplementär zur gewünschten Prägegeometrie profiliert und prägt dieses in das vorbeiführende Profilmaterial ein.

Dabei saugt eine im Bereich des als Walze ausgeprägten Prägewerkzeuges vorgesehene Unterdruckanordnung das Profilmaterial gegen die abrollende Walzenumfangsfläche. Die Prägewalze tritt durch eine Öffnung der Unterdruckkammer mit ihrem Teil des Umfanges hindurch und ist am Anfang einer Kalibrierdüse angeordnet.

Die Walze läuft dabei wie ein Rollsiegel über die zu prägende, noch verformbare Oberfläche des Profilmateriais, wobei durch die Saugwirkung, welche das Profilmaterial gegen die Prägewalze anzieht, dessen Oberfläche fein, deutlich und ohne Hinterlassung unerwünschter Bearbeitungsspuren mit jener geforderten Profilierung versehen wird. weiche dem Außenprofil der Prägewalze entspricht. Die erzielbare Saugwirkung reicht aus. um die Oberfläche des Profilmaterials gegen die Prägewalze anzuziehen, daß eine saubere Prägung erzielt wird, aber insgesamt nur eine so geringe Kraftwirkung ausgeht, daß die Maßhaltigkeit des Profilmaterials nicht dauerhaft beeinträchtigt wird. Ein weiterer Vorteil wird darin gesehen, daß der Prägevorgang nach der Extrusion erfolgt, in dem das Profilmaterial noch verformbar ist und unerwünschte Verformungen verhindert werden.

Nachteilig bei dieser Vorrichtung, die im allgemeinen nur für Hohlkammerprofile zum Einsatz kommt, wird gesehen, daß auch diese recht aufwendig in ihrem Aufbau ist und daß die Verformungen im warmplastischen Bereich stattfinden. Nach der Umformung kühlt das Profilmaterial aus und bedingt durch die Relaxation werden die Konturen der Einprägungen im Laufe der Zeit verwischt. Ein weiterer Nachteil wird darin gesehen, daß das Verfahren zur Prägung der Oberfläche des Profilmaterials unter Anlegen eines Vakuums vonstatten geht. Hierzu sind recht umfangreiche Vorrichtungen notwendig, wobei die Kontrolle und Steuerung das Prägeverfahren nur sehr schwer möglich ist.
Die zum Einsatz kommenden Prägewalzen haben die gleiche Breite wie die durchlaufenden Profile und können so zu Beschädigungen und Deformationen im Randbereich der durchlaufenden Profile führen.

Ein weiterer Nachteil dieses Verfahrens besteht darin, daß die für dieses Prägeverfahren verwendete Vorrichtung partiell in die Oberfläche der durchlaufenden Profilmaterialien eindringt, diese schädigt und von der Prägegeometrie innerhalb des Profilmaterials eine Kerbwirkung ausgeht und damit potentielle Risse initiiert werden.

Hier setzt die Erfindung ein, die es sich zur Aufgabe gestellt hat, die bisher bekannten Verfahren dahingehend zu verbessern, dass hier ein Verfahren aufgezeigt wird, das einfach, wirtschaftlich und mit hoher Gleichmäßigkeit eine materialsparende Herstellung von Profilen bei gleichzeitiger voller Aufrechterhaltung der erforderlichen Stabilität angibt.

Die Aufgabe wird erfindungsgemäß gelöst durch ein eingangs genanntes Verfahren, als umzuformende C- oder U-förmige Profile zugeführt werden und in einem zweiten Verfahrensschritt die Seitenwände der C- und U-förmigen Profile abgespreizt werden, im dritten Verfahrensschritt die Umformvorrichtung die gewünschte Umformgeometrie in das Durchlaufprofil einprägt, so dass die umlaufenden Ränder der Einprägungen in ihre Wandstärke reduziert und kalt verfestigt werden, in einem vierten Verfahrensschritt die Seitenwände der C- und U-förmigen Profile im bereits abgespreizten Zustand gehalten werden, in einem fünften Verfahrensschritt die Seitenwände der C- und U-förmigen Profile wieder in den Ausgangszustand zurückgeführt werden und in einem sechsten Verfahrenschritt die geprägten Profile in definierte Einheiten abgelenkt werden.

Ein Vorteil dieses Verfahrens besteht darin, dass es nahezu unabhängig von den verwendeten Profilgeometrien zum Einsatz kommen kann, wobei hier nur die gewünschte Umformgeometrie die geforderte Umformvorrichtung definiert.

Ein weiterer entscheidender Vorteil der Umformvorrichtung wird darin gesehen, dass die Profile abgekühlt und im formstabilen Zustand so umgeformt werden, dass die Höhe der Einprägung wenigstens der halben Wandstärke des durchlaufenden Profiles entspricht.

Die erfindungsgemäßen Vorteile können auch erreicht werden durch die erfindungsgemäße Vorrichtung nach Anspruch 3, die zur Durchführung des Verfahrens dient.

In einer vorteilhaften Ausführungsform ist die Umformvorrichtung ein gegenläufig rotierendes Prägewerkzeug, welches aus wenigstens einer Stempelwalze und wenigstens einem Matrizenring besteht
Der Spalt, d. h. der Abstand zwischen dem höchsten Punkt der Stempelwalze und dem höchsten Punkt des Matrizenringes, entspricht wenigstens der Wandstärke des durchlaufenden Profiles.
Vorteilhafterweise entspricht der Abstand zwischen dem höchsten und dem tiefsten Punkt der Stempelwalze im Bereich der Einprägung wenigstens der halben Wandstärke des durchlaufenden Profiles. Dadurch werden die umlaufenden Randbereiche der Einprägungen in ihrer Wandstärke reduziert, kalt verfestigt und führen damit zu einer besonderen Stabilisierung des durchlaufenden Profiles. Der Abstand zwischen dem höchsten und tiefsten Punkt des Matrizenrings entspricht wenigstens der halben Wandstärke des durchlaufenden Profiles, so dass diese Reduzierung der Wandstärke und die damit verbundene Verfestigung des Profilmaterials erreicht wird.

In einer weiteren vorteilhaften Ausführungsform der erfindungsgemäßen Vorrichtung sind eine oder mehrere Stempelwalzen und eine oder mehrere dazugehörige Matrizenringe in der Strecke integriert.

Dabei können diese antriebslos und frei drehbar gelagert sein, so daß die Geschwindigkeit des gegenläufigen Prägewerkzeuges durch die Abzugsgeschwindigkeit in der Extrusionsstrecke definiert ist.
In einer weiteren vorteilhaften Ausführungsform verfügen die Stempelwalzen und Matrizenringe über gemeinsame Antriebseinheiten, deren Geschwindigkeiten in etwa gleich der Abzugsgeschwindigkeit des durchlaufenden Profiles in der Extrusionsstrecke sind.

In einer weiteren Ausführungsform besteht die Umformvorrichtung aus wenigstens einem Stempelwerkzeug definierter Länge mit wenigstens einem komplementären Widerlager. Diese Ausführungsform kann so ausgebildet sein, daß das Stempelwerkzeug mit dem komplementären Widerlager in axiale Richtung, daß heißt in Extrusionsrichtung, beweglich gelagert ist und intermittierende Bewegungen ausführt. Dadurch kann der Umformprozeß kostengünstig in der Extrusionsstrecke durchgeführt werden, da daß Umformwerkzeug sich mit der gleichen Geschwindigkeit wie das durchlaufende Profil bewegt.

In einer weiteren erfindungsgemäßen Ausführung ist das Umformwerkzeug so ausgebildet, daß das Stempelwerkzeug und das komplementäre Widerlager eine Bewegung senkrecht zur Extrusionsrichtung ausführen kann.
Dies ist beispielsweise bei relativ niedrigen Extrusionsgeschwindigkeiten von Vorteil, bei denen man das umzuformende Profilstück festklammert und die gewünschte Umformgeometrie einfügt, während das durchlaufende Profil in der Extrusionsstrecke bevorratet wird.
Hierdurch können die Kosten für das Umformwerkzeug geringer gehalten werden, was sich positiv auf die Preisgestaltung des Fertigproduktes auswirkt.
Auch bei dieser Ausführungsform ist der Abstand zwischen dem höchsten Punkt des Stempelwerkzeuges und dem höchsten Punkt des komplementären Widerlagers wenigstens mit der Wandstärke des durchlaufenden Profiles ausgeführt. Weiterhin vorteilhaft bei dieser Ausführungsform ist der Abstand zwischen dem höchsten Punkt und dem tiefsten Punkt des Stempelwerkzeuges im Bereich der Einprägungen wenigstens mit der halben Wandstärke des durchlaufenden Profiles ausgebildet. Der Abstand des höchsten Punktes und des tiefsten Punktes des komplementären Widerlagers ist vorteilhafterweise im Bereich der Einprägung wenigstens mit der halben Wandstärke des durchlaufenden Profites entsprechend ausgebildet.
Hierdurch wird erreicht, daß die Verfestigung im umlaufenden Randbereich der Einprägungen erzielt wird und ein Profil hergestellt werden kann, welches eine geringere Ausgangswandstärke bei gleichen mechanischen Festigkeiten aufweist als herkömmliche mit dem Stand der Technik gefertigte Profile.

### Ausführungsbeispiele

Anhand der schematischen Zeichnungen sind beispielhaft einige Ausführungformen von umgeformten Profilen näher erläutert.
- Figur 1: Schnittdarstellung durch ein bandförmiges Profil
- Figur 2: Schnittdarstellung durch ein L-förmiges Profil
- Figur 3: Schnittdarstellung durch ein U-förmiges Profil
- Figur 4: Schnittdarstellung durch ein C-förmiges Profil

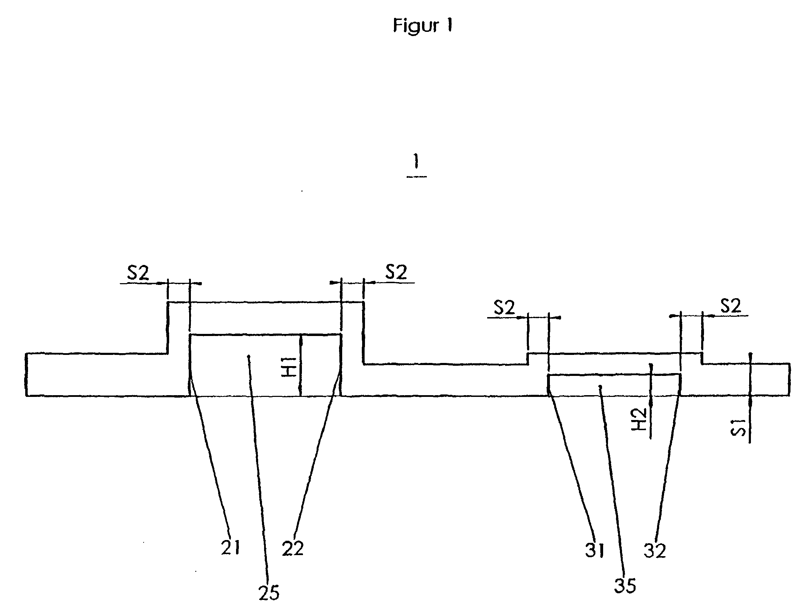

In Figur 1 ist ein bandförmiges Profil 1 mit der Grundwandstärke S1 dargestellt. In dieses Profil sind nebeneinanderiiegende Einprägungen 25 mit der Höhe H1 und 35 mit der Höhe H2 ausgeführt.
Die Höhe H1 entspricht bei diesem Ausführungsbeispiel in etwa der anderthalbfachen Grundwandstärke S1, während die Höhe H2 der halben Grundwandstärke S1 entspricht.
In den Randbereichen 21, 22, der Einprägung 25 und den Randbereichen 31, 32 der Einprägung 35 ist die durch die Kaltverfestigung reduzierte Wandstärke S2 erkennbar.

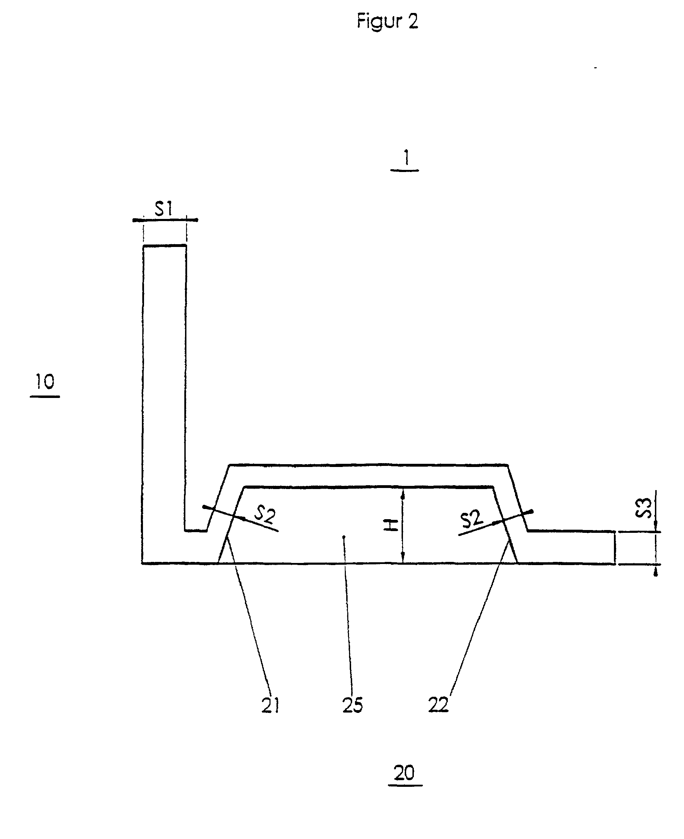

In Figur 2 ist das L-förmige Profil 1 mit der Grundwandstärke S1 des senkrechten Schenkels 10 dargestellt. Der waagrechte Schenkel 20 ist in der reduzierten Wandstärke S3 ausgeführt, da durch die Einprägung 25 mit der Höhe H, die in diesem Fall der doppelten Grundwandstärke S1 des Grundprofiles 1 entspricht, die gleiche Stabilität und Festigkeit bei der verringerten Wandstärke S3 erreicht wird. Im Randbereich 21, 22 der Einprägung 25 ist die durch die Kaltverfestigung des Materials reduzierte Wandstärke S2 erkennbar.

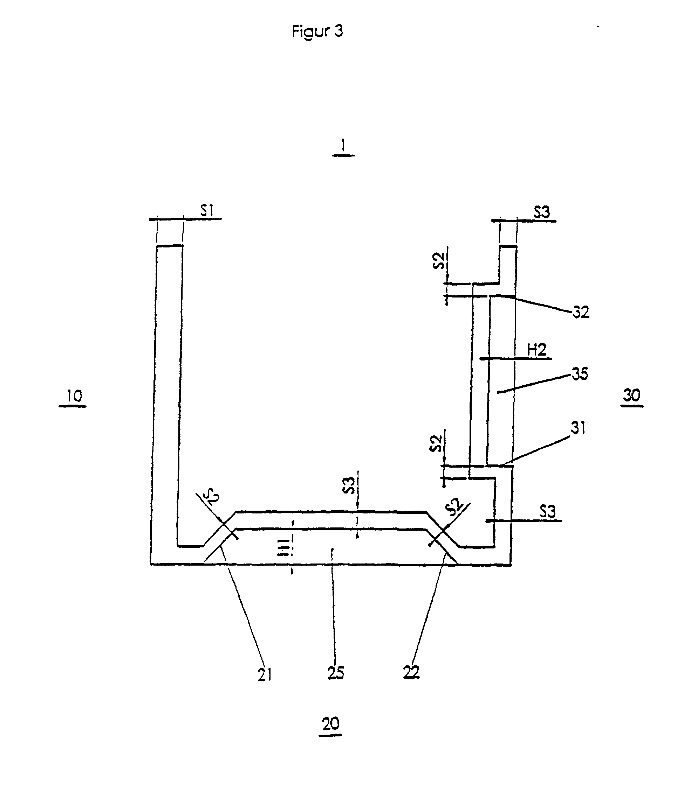

Das U-förmige Profil 1 in Figur 3 wurde einer doppelten Umformung unterzogen. Die Grundwandstärke S1 des Profiles 1 welche im Schenkel 10 realisiert ist konnte im Bereich der Umformungen auf die Wandstärke S3 reduziert werden. Die Höhe H 1 der Einprägung 25 im Bodenteil 20 des Profiles 1 entspricht in etwa der Grundwandstärke S1 des senkrechten Schenkels 10 des Profiles 1. Im Randbereich 21, 22 der Einprägung 25 ist die durch die Kaltverfestigung reduzierte Wandstärke S2 erkennbar. Im rechten Schenkel 30 des Profiles 1 ist eine Einprägung 35 mit einer Höhe H2 erkennbar, die in etwa der Grundwandstärke S 1 des Schenkels 10 des Profiles 1 entspricht. Die Grundwandstärke S3 im Schenkel 30 des Profiles 1 entspricht der Wandstärke des Bodenteiles 20 des Profiles 1. Im Randbereich 31, 32 der Einprägung 35 des rechten Schenkels 30 des Profites 1 ist die durch die Kaltverfestigung entstandene reduzierte Wandstärke S2 erkennbar.

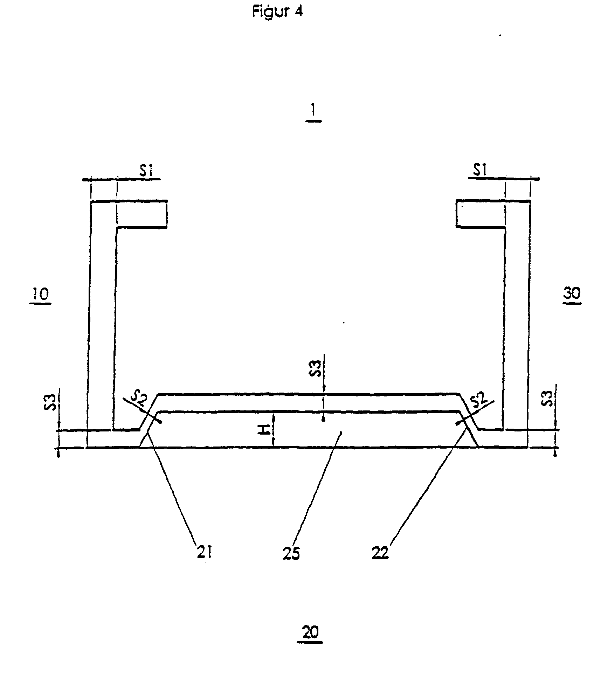

In Figur 4 ist ein C-förmiges Profil 1 dargestellt, wobei der linke Schenkel 10 und der rechte Schenkel 30 in der Grundwandstärke S1 ausgeführt sind. Im Bereich des Bodenteiles 20 ist eine Einprägung 25 eingebracht, deren Höhe H in etwa der anderthalbfachen Grundwandstärke S1 des linken Schenkels 10 und des rechten Schenkels 30 entspricht.
Die Wandstärke S3 des Bodenteiles 20 ist reduziert gegenüber der Grundwandstärke S1 des Profiles 1. Im Randbereich 21, 22 der Einprägung 25 ist die durch die Kaltverfestigung reduzierte Wandstärke S 2 erkennbar.

## Patentansprüche

1. Verfahren zum Umformen von extrudierten Profilen aus thermoplastischen Materialien mit einer Umformvorrichtung, die an ihre Umformfläche komplementär zur geforderten Umformgeometrie profiliert ist und bei dem in einem ersten Verfahrensschritt das umzuformende Profil abgekühlt und im formstabilen Zustand der Umformeinrichtung zugeführt wird,
**dadurch gekennzeichnet,**
**dass** als umzuformende Profile C- oder U-förmige Profile zugeführt werden und in einem zweiten Verfahrensschritt die Seitenwände der C- und U-förmigen Profile abgespreizt werden, und in einem dritten Verfahrensschritt die Umformvorrichtung die gewünschte Umformgeometrie in das durchlaufende Profil einprägt, so dass die umlaufenden Ränder der Einprägungen in ihrer Wandstärke reduziert und kalt verfestigt werden, und in einem vierten Verfahrensschritt die Seitenwände der C- und U-förmigen Profile im bereits abgespreizten Zustand gehalten werden und in einem fünften Verfahrensschritt die Seitenwände der C- und U-förmigen Profile wieder in den Ausgangszustand zurückgeführt werden und in einem sechsten Verfahrensschritt die geprägten Profile in definierten Einheiten abgelängt werden.

2. Verfahren nach Anspruch 1, bei dem die Profile so umgeformt werden, dass die Höhe der Einprägungen wenigstens der halben Wandstärke des Profils entspricht.

3. Vorrichtung zum Durchführen eines Verfahrens nach Anspruch 1 oder 2, mit einem Umformwerkzeug das an seiner Umformfläche komplementär zur geforderten Umformgeometrie profiliert ist **dadurch gekennzeichnet, daß** die Vorrichtung eine Führung für das C- oder U-förmige Profil und eine Vorrichtung zum Auseinanderspreizen der Schenkel der C- oder U-förmigen Profile, eine Vorrichtung zum Halten der Schenkel im auseinandergespreizten Zustand und eine Vorrichtung zum Zurückführen der Schenkel in den Ausgangszustand aufweist.

4. Vorrichtung nach Anspruch 3, **dadurch gekennzeichnet, dass** das Umformwerkzeug ein gegenläufig rotierendes Prägewerkzeug ist, welches aus wenigstens einer Stempelwalze und wenigstens einem Matrizenring besteht.

5. Vorrichtung nach Anspruch 3 oder 4, **dadurch gekennzeichnet, dass** der Abstand zwischen dem höchsten Punkt der Stempelwalze und dem höchsten Punkt des Matrizenringes wenigstens der Wandstärke des durchlaufenden Profiles entspricht.

6. Vorrichtung nach einem der Ansprüche 3 bis 5, **dadurch gekennzeichnet, dass** der Abstand zwischen dem höchsten und dem tiefsten Punkt der Stempelwalze wenigstens der halben Wandstärke des durchlaufenden Profiles entspricht.

7. Vorrichtung nach einem der Ansprüche 3 bis 6, **dadurch gekennzeichnet, dass** der Abstand zwischen dem höchsten und dem tiefsten Punkt des Matrizenringes wenigstens der halben Wandstärke des durchlaufenden Profiles entspricht.

8. Vorrichtung nach einem der Ansprüche 3 bis 7, **dadurch gekennzeichnet, dass** die Stempelwalze und der Matrizenring antriebslos und frei drehbar gelagert sind.

9. Vorrichtung nach einem der Ansprüche 3 bis 8, **dadurch gekennzeichnet, dass** eine oder mehrere Stempelwalzen und ein oder mehrere Matrizenringe über eine gemeinsame Antriebseinheit verfügen.

10. Vorrichtung nach einem der Ansprüche 3 bis 9, **dadurch gekennzeichnet, dass** die Geschwindigkeit des gegenläufig rotierenden Prägewerkzeuges in etwa gleich der Abzugsgeschwindigkeit des durchlaufenden Profiles in einer Extrusionsstrecke ist.

11. Vorrichtung nach Anspruch 3, **dadurch gekennzeichnet, dass** das Umformwerkzeug aus wenigstens einem Stempelwerkzeug definierter Länge mit wenigstens einem komplementären Widerlager besteht.

12. Vorrichtung nach Anspruch 11, **dadurch gekennzeichnet, dass** das Stempelwerkzeug und das komplementäre Widerlager in axiale Richtung beweglich gelagert ist und intermittierende Bewegungen ausführt.

13. Vorrichtung nach Anspruch 11 oder 12, **dadurch gekennzeichnet, dass** das Stempelwerkzeug und das komplementäre Widerlager eine Bewegung senkrecht zur Extrusionsrichtung ausführt.

14. Vorrichtung nach einem der Ansprüche 11 bis 13, **dadurch gekennzeichnet, dass** der Abstand zwischen dem höchsten Punkt des Stempelwerkzeuges und dem höchsten Punkt des komplementären Widerlagers wenigstens der Wandstärke des durchlaufenden Profiles entspricht.

15. Vorrichtung nach einem der Ansprüche 11 bis 14, **dadurch gekennzeichnet, dass** der Abstand zwischen dem höchsten Punkt und dem tiefsten Punkt des Stempelwerkzeuges im Bereich der Einprägung wenigstens der halben Wandstärke des durchlaufenden Profiles entspricht.

16. Vorrichtung nach einem der Ansprüche 11 bis 15, **dadurch gekennzeichnet, dass** der Abstand zwischen dem höchsten Punkt und dem tiefsten Punkt des komplementären Widerlagers im Bereich der Einprägung wenigstens der halben Wandstärke des durchlaufenden Profiles entspricht.

## Claims

1. Process to shape extruded profiles made of thermoplastic materials with a moulding device with a complimentary profile at its shaping surface to the required moulded geometry and in which the profile to be shaped is cooled in the first step of the process and fed to the moulding device in a rigid state,
**characterised by**:
the profile to be shaped is supplied as a C or U-shaped profile and the side walls of the C or U-shaped profile are forced apart in the second step of the process, the moulding device imposes the desired geometry upon the passing profile in the third step of the process such that the peripheral edges of the impressions reduce the wall thickness and are solidified by cooling. In the fourth step of the process, the side walls of the C or U-shaped profiles are held apart and in the fifth step of the process, the side walls of the C or U-shaped profile are returned to their original condition and the moulded profiles are cut to defined lengths in the sixth step of the process.

2. Process as described in Claim 1, in which the profiles are shaped such that the depth of the impressions correspond to at least half of the, wall thickness of the profile.

3. Device to perform moulding as described in Claims 1 and 2, with a moulding die with a profile complementary to the required moulding geometry at its moulding surface, **characterised by**: the device is equipped with a guide for the C or U-shaped profile and a device to force apart the shanks of the C or U-shaped profile, a device to hold the shanks in a separated condition and a device to return the shanks to their original state.

4. Device as described in Claim 3, **characterised by**: the moulding die is a counterrotating, embossing die which consists of at least one stamping roller and at least one die ring.

5. Device as described in Claims 3 and 4, **characterised by**: the distance between the highest point of the stamping ring and the highest point of the die ring represents at least the wall thickness of the passing profile.

6. Device as described in Claims 3-5, **characterised by**: the distance between the highest and lowest points of the stamping roller represents at least half of the wall thickness of the passing profile.

7. Device as described in Claims 3 to 6, **characterised by**: the distance between the highest and lowest points of the die ring represents at least half of the wall thickness of the passing profile.

8. Device as described in Claims 3 to 7, **characterised by**: the stamping roller and the die ring are not driven and rotate freely in bearings.

9. Device as described in Claims 3 to 8, **characterised by**: one or more stamping rings and one or more die rings are equipped with a common drive unit.

10. Device as described in Claims 3 to 9, **characterised by**: the speed of the counterrotating embossing die is approximately equal to the drawing speed of the passing profile in an extrusion line.

11. Device as described in Claim 3, **characterised by**: the moulding die consists of at least one stamping die with at least one complementary thrust block.

12. Device as described in Claim 11, **characterised by**: the stamping die and the complementary thrust block are moveable in an axial direction and execute intermittent movements.

13. Device as described in Claims 11 and 12, **characterised by**: the stamping die and the complementary thrust block execute a movement vertically to the direction of extrusion.

14. Device as described in Claims 11 to 13, **characterised by**: the distance between the highest point of the stamping die and the highest point of the complementary thrust block represents at least the wall thickness of the passing profile.

15. Device as described in Claims 11 to 14, **characterised by**: the distance between the highest and lowest points of the stamping die at the impressed area represents at least half of the wall thickness of the passing profile.

16. Device as described in Claims 11 to 15, **characterised by**: the distance between the highest and lowest points of the complementary thrust block at the impressing area represents at least half of the wall thickness of the passing profile.

## Revendications

1. Procédé de formage de profilés extrudés en matériaux thermoplastiques à l'aide d'un dispositif de formage dont la surface de formage est profilée complémentairement à la geometrie de formage souhaitée, une première opération de ce procédé consistant à refroidir le profilé à former et à le diriger vers le dispositif de formage dans un état stable,
**caractérisé en ce que**
les profilés alimentés sont des profilés de forme C ou U, que dans une deuxième opération les parois latérales des profilés en forme de C et de U sont écartés, que dans une troisième opération le dispositif de formage imprime la géométrie de formage souhaitée dans le profilé qui le traverse de sorte que l'épaisseur de paroi des bords périphériques des empreintes est réduite et les bords durcis à froid, que dans une quatrième opération, les parois latérales des profilés en forme de C et de U sont maintenus écartés, que dans une cinquième opération les parois latérales des profilés en forme de C et de U sont ramenés à leur état initial et que dans une sixième opération, les profilés estampés sont coupés en unités définies.

2. Procédé selon la revendication 1 dans lequel des profilés sont formés de telle manière que la hauteur des empreintes correspond à au moins la moitié de l'épaisseur de paroi.

3. Dispositif de réalisation d'un procédé selon la revendication 1 ou 2, comportant un outil de formage dont la surface de formage est profilée complémentairement à la géométrie de formage exigée, **caractérisé en ce que** le dispositif présente un guide du profilé en forme de C ou de U et un dispositif d'écartement des ailes des profilés en forme de C ou de U, un dispositif de maintien des ailes à l'état écarté et un dispositif permettant de ramener les ailes à l'état initial.

4. Dispositif selon la revendication 3, **caractérisé en ce que** l'outil de formage est un outil d'estampage rotatif opposé comprenant au moins un rouleau de poinçonnage et au moins un anneau de matrice.

5. Dispositif selon la revendication 3 ou 4, **caractérisé en ce que** la distance entre le point le plus élevé du rouleau de poinçonnage et le point le plus élevé de l'anneau de matrice correspond au moins à l'épaisseur de paroi du profilé qui traverse le dispositif.

6. Dispositif selon l'une des revendications 3 à 5, **caractérisé en ce que** la distance entre le point le plus haut et le point le plus bas du rouleau de poinçonnage correspond au moins à la moitié de l'épaisseur de paroi du profilé qui traverse le dispositif

7. Dispositif selon l'une des revendications 3 à 6, **caractérisé en ce que** la distance entre le point le plus haut et le point le plus bas de l'anneau de matrice correspond au moins à la moitié de l'épaisseur de paroi du profilé qui traverse le dispositif.

8. Dispositif selon l'une des revendications 3 à 7, **caractérisé en ce que** le rouleau de poinçonnage et l'anneau de matrice comportent une suspension sans entraînement et en rotation libre.

9. Dispositif selon l'une des revendications 3 à 8, **caractérisé en ce qu'**un ou plusieurs rouleaux de poinçonnage et un ou plusieurs anneaux de matrice comportent une unité d'entraînement commune.

10. Dispositif selon l'une des revendications 3 à 9, **caractérisé en ce que** la vitesse de l'outil d'estampage rotatif opposé est approximativement égale à la vitesse de tirage du profilé dans une vis d'extrudeuse.

11. Dispositif selon la revendication 3, **caractérisé en ce que** l'outil de formage comporte au moins un outil d'estampage de longueur définie avec au moins une butée complémentaire.

12. Dispositif selon la revendication 11, **caractérisé en ce que** l'outil d'estampage et la butée complémentaire sont mobiles dans le sens axial et exécutent des mouvements intermittents.

13. Dispositif selon la revendication 11 ou 12, **caractérisé en ce que** l'outil d'estampage et la butée complémentaire exécutent un mouvement vertical par rapport au sens d'extrusion.

14. Dispositif selon l'une des revendications 11 à 13, **caractérisé en ce que** la distance entre le point le plus élevé l'outil d'estampage et le point le plus élevé de la butée complémentaire correspond au moins à l'épaisseur de paroi du profilé qui traverse le dispositif.

15. Dispositif selon l'une des revendications 11 à 14, **caractérisé en ce que** la distance entre le point le plus haut et le point le plus bas de l'outil d'estampage correspond au moins, dans la zone de l'empreinte, à la moitié de l'épaisseur de paroi du profilé qui traverse le dispositif.

16. Dispositif selon l'une des revendications 11 à 15, **caractérisé en ce que** la distance entre le point le plus haut et le point le plus bas de la butée complémentaire correspond au moins, dans la zone de l'empreinte, à la moitié de l'épaisseur de paroi du profilé qui traverse le dispositif.
